# EUROPEAN PATENT APPLICATION

(11) **EP 4 807 841 A1**
(43) Date of publication of application: **16.09.2026**
(21) Application number: 25812280.3
(22) Date of filing: 24.04.2025
(51) Int. Cl.: H01M 10/0525, H01M 10/0567, H01M 10/0566, H01M 4/38

(54) **BATTERY**

(30) Priority: 21.01.2025 CN 202510094491
(71) Applicant: Guangzhou Tinci Materials Technology Co., Ltd., Guangzhou, Guangdong 510760 (CN)
(72) Inventor: CHI, Lingli, Guangzhou, Guangdong 510670 (CN); YUE, Yujuan, Guangzhou, Guangdong 510670 (CN); SUN, Wenpo, Guangzhou, Guangdong 510670 (CN); XIE, Tian, Guangzhou, Guangdong 510670 (CN)
(74) Representative: Plougmann Vingtoft a/s
(86) International application number: PCT/CN2025/090827
(87) International publication number: WO 2026/157053

(57) **Abstract**

The present disclosure relates to the technical field of batteries. Specifically, the present disclosure relates to a battery, which includes an electrolyte and a negative electrode plate. The electrolyte includes a first additive and a second additive. The first additive has a structure represented by Formula 1. The second additive is selected from the group consisting of tripropargyl phosphate, propyl bis(2-propynyl) phosphate, ethyl bis(2-propynyl) phosphate, and a combination thereof. The negative electrode plate includes a negative electrode active material. The negative active material includes element silicon. The battery including the above additives has a high degree of interfacial flatness and good cycle performance.

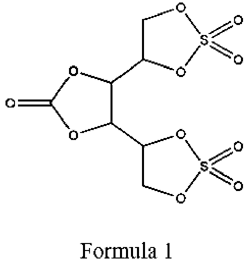

## Description

### PRIORITY INFORMATION

This application claims priority to Chinese Patent Application No. 202510094491.9, filed with China National Intellectual Property Administration on January 21, 2025, the entire disclosure of which is incorporated herein by reference.

### FIELD

The present disclosure relates to the technical field of batteries, and particularly, to a battery.

### BACKGROUND

Silicon exhibits an extremely high theoretical specific capacity (4200 mAh/g), a low lithium intercalation potential, and can provide Li⁺ deintercalation/intercalation channels in multiple directions. However, it has problems such as poor conductivity, particle pulverization, unstable solid electrolyte interface (SEI) growth, and volume expansion. These problems ultimately lead to a reduction in coulombic efficiency and cycle life of silicon-based lithium-ion batteries, as well as poor fast-charging cycle performance of the batteries. Therefore, regulating the electrolyte composition and improving stability of the SEI film are crucial for enhancing the electrochemical performance of the silicon-containing lithium-ion batteries.

### SUMMARY

The present disclosure aims to solve one of the technical problems in the related art at least to some extent. To this end, an object of the present disclosure is to provide a battery, which has good interfacial flatness and excellent fast-charging cycle performance.

To this end, the present disclosure provides a battery. The battery includes an electrolyte and a negative electrode plate. The electrolyte includes a first additive and a second additive. The first additive has a structure represented by Formula 1. The second additive includes at least one of tripropargyl phosphate, propyl bis(2-propynyl) phosphate, or ethyl bis(2-propynyl) phosphate. The negative electrode plate includes a negative electrode active material. The negative electrode active material includes element silicon.

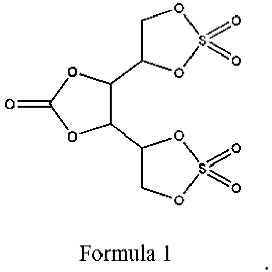

In view of the situation where an electrode interface of existing secondary batteries is susceptible to damage during cycling, the present disclosure provides a battery. The battery includes a first additive and a second additive. The two additives undergo electropolymerization during battery operation and jointly adhere to the surfaces of positive and negative electrodes to maintain interfacial flatness, thereby promoting cycle stability of the battery.

Specifically, the first additive (the compound represented by Formula 1) undergoes de-esterification to form a long-chain hydrocarbon polymer with by-products Li₂SO₄ and Li₂CO₃. Li₂SO₄ has an ability to oxidize other unsaturated groups (such as carbon-carbon triple bonds C≡C), thereby promoting polymerization of other additives. Li₂CO₃ can effectively weaken the reductive decomposition of ethylene carbonate (EC) in the electrolyte at 0.75 V and inhibit the formation of lithium alkyl carbonate at 0.6 V, thereby maintaining electrolyte stability, reducing Li⁺ loss, and improving cycle stability of the lithium-ion battery.

Specifically, the second additive contains unsaturated alkynyl groups at both ends, which serve as polymerization sites during polymerization to form long-chain polymers. During actual charge/discharge process, the second additive can be tightly anchored on the surfaces of the positive and negative electrodes through C≡C without decomposing, thereby maintaining interfacial flatness, mitigating volume expansion and pulverization of the silicon negative electrode, and thus promoting the cycle stability of the battery. However, when the concentration of the second additive reaches a certain level, its adsorption mode changes from horizontal adsorption to vertical adsorption, which hinders lithium-ion transport and reduces the uniformity of the interfacial film, resulting in increased impedance and other situations.

Li₂SO₄ generated from the polymerization of the first additive oxidizes the C≡C in the second additive structure, promoting bond-cleavage polymerization of C≡C. At the same time, the reaction product is adsorbed on the interface, reducing the probability of vertical adsorption of the second additive, thereby mitigating adverse effects of the second additive on the negative electrode structure. In this way, the interfacial flatness is maintained, the volume expansion and pulverization of the silicon negative electrode are mitigated, and thus the fast-charging cycle stability of the battery is improved.

According to an embodiment of the present disclosure, a mass ratio of the first additive to the second additive is 1: (0.1 to 2), preferably 1: (0.1 to 1). Therefore, the interfacial flatness of the battery can be improved, thereby enhancing its fast-charging cycle performance.

According to an embodiment of the present disclosure, the battery further includes a third additive. The third additive has a structure represented by Formula 2: 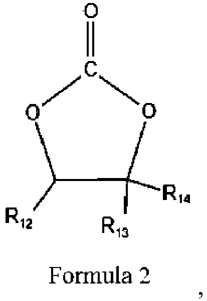
wherein R₁₂, R₁₃, and R₁₄ are each independently selected from H, C₁ to C₆ alkyl, or C₂ to C₄ alkenyl, provided that R₁₂, R₁₃, and R₁₄ are not all H simultaneously and that at least one of R₁₂, R₁₃, or R₁₄ contains a carbon-carbon double bond; or
R₁₂ and an atom bonded to R₁₂ together form C₂ to C₄ alkenyl, and R₁₃ and R₁₄ are each independently selected from H, C₁ to C₆ alkyl, or C₂ to C₄ alkenyl; or
R₁₂ and R₁₃ and atoms bonded to R₁₂ and R₁₃ together form C₃ to C₈ cycloalkenyl, and R₁₄ is H.

Specifically, at least one of R₁₂, R₁₃, or R₁₄ in the third additive structure contains the carbon-carbon double bond, which can undergo electropolymerization during battery operation and adheres to the surface of negative electrode to maintain interfacial flatness of the negative electrode, thereby promoting cycle stability of the battery. There are mainly two modes of polymerization pathways: in the first mode, the olefin group undergoes bond cleavage and repolymerization, with cyclic ester moieties distributed at both ends of the polymer chain; in the second mode, a low-degree polymerization occurs, where the C-O bond is preferentially cleaved, followed by side-by-side polymerization of C=C bonds, thereby yielding a high-molecular-weight long-chain polymer. The polymerization process of the second mode is more stable than that of the first mode. However, excessive addition of the third additive leads to the generation of a large number of long-chain polymers, which hinders transmission of the lithium ions and significantly increases interfacial charge transfer impedance. The first additive in the present disclosure can mitigate the adverse effects of the third additive on the transmission of the lithium ions, ultimately ensuring stable long-cycle and high-temperature storage performance of the battery. That is, the combanition of the third additive with the first additive and the second additive can further maintain the interfacial flatness of the battery, thereby improving the fast-charging cycle stability of the battery.

According to an embodiment of the present disclosure, R₁₂, R₁₃, and R₁₄ are each independently selected from H, C₁ to C₄ alkyl, or C₂ to C₄ alkenyl, provided that R₁₂, R₁₃, and R₁₄ are not all H simultaneously and that at least one of R₁₂, R₁₃, or R₁₄ contains a carbon-carbon double bond; or
R₁₂ and an atom bonded to R₁₂ together form C₂-C₄ alkenyl, and R₁₃ and R₁₄ are each independently selected from C₁ to C₄ alkyl or C₂ to C₄ alkenyl; or
R₁₂ and R₁₃ and atoms bonded to R₁₂ and R₁₃ together form C₇ to C₈ cycloalkenyl, and R₁₄ is H. Therefore, the interfacial flatness of the battery can be improved, thereby enhancing its fast-charging cycle performance.

According to an embodiment of the present disclosure, R₁₂, R₁₃, and R₁₄ are each independently selected from H, C₁ alkyl, or C₂ alkenyl, provided that R₁₂, R₁₃, and R₁₄ are not all H simultaneously and that at least one of R₁₂, R₁₃, or R₁₄ contains a carbon-carbon double bond; or
R₁₂ and an atom bonded to R₁₂ together form C₂ alkenyl, and R₁₃ and R₁₄ are each independently selected from C₁ alkyl or C₂ alkenyl; or
R₁₂ and R₁₃ and atoms bonded to R₁₂ and R₁₃ together form C₇ cycloalkenyl, and R₁₄ is H. Therefore, the interfacial flatness of the battery can be improved, thereby improving the fast-charging cycle performance of the battery.

According to an embodiment of the present disclosure, the third additive includes at least one of the following compounds:

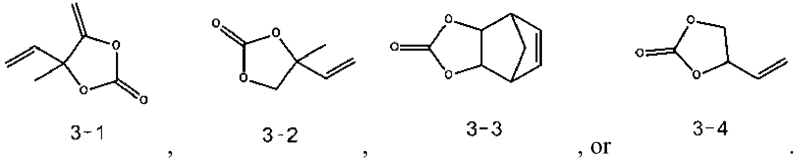

Therefore, the interfacial flatness of the battery can be improved, thereby enhancing its fast-charging cycle performance.

According to an embodiment of the present disclosure, a mass ratio of the first additive, the second additive, and the third additive is 1:(0.1 to 2):(0.1 to 1), preferably 1:(0.1 to 1):(0.1 to 0.2). Therefore, the interfacial flatness of the battery can be improved, thereby enhancing its fast-charging cycle performance.

According to an embodiment of the present disclosure, the battery includes an electrolyte. Based on a total mass of the electrolyte, a mass proportion of the first additive ranges from 0.05% to 5%, preferably from 0.1% to 1%. Therefore, the interfacial flatness of the battery can be improved, thereby enhancing its fast-charging cycle performance.

According to an embodiment of the present disclosure, based on the total mass of the electrolyte, a mass proportion of the second additive ranges from 0.05% to 1%, preferably from 0.1% to 0.4%. Therefore, the interfacial flatness of the battery can be improved, thereby enhancing its fast-charging cycle performance.

According to an embodiment of the present disclosure, based on the total mass of the electrolyte, a mass proportion of the third additive ranges from 0.01% to 0.5%, preferably from 0.05% to 0.1%. Therefore, the interfacial flatness of the battery can be improved, thereby enhancing its fast-charging cycle performance.

According to an embodiment of the present disclosure, the electrolyte further includes a lithium salt. The lithium salt includes at least one of lithium hexafluorophosphate, or lithium bis(fluorosulfonyl)imide. Therefore, gas generation of the battery can be reduced, thereby enhancing its cycle performance.

According to an embodiment of the present disclosure, the lithium salt includes lithium hexafluorophosphate and lithium bis(fluorosulfonyl)imide, and a mass ratio of the lithium hexafluorophosphate to the lithium bis(fluorosulfonyl)imide is (2 to 5):1. Therefore, gas generation of the battery can be reduced, thereby enhancing its cycle performance.

According to an embodiment of the present disclosure, the battery further includes a positive electrode active material. The positive electrode active material includes at least one of lithium iron phosphate material, LiCoO₂ material, a lithium-rich manganese-based material (aLi₂MnO₃•(1-a)LiMO₂), LiNiₓCo_{y}Mn_{z}O₂ material, a lithium nickel manganese oxide (LiNi_{0.5}Mn_{1.5}O₄) material, or a lithium manganese iron phosphate (LiFe_{b}Mn_{1-b}PO₄), where 0≤a≤1; 0≤b≤1; x+y+z=1; and M includes at least one of Ni, Co, or Mn. Therefore, the cycle performance of the battery can be enhanced.

According to an embodiment of the present disclosure, the battery is a cylindrical battery.

According to an embodiment of the present disclosure, the cylindrical battery is an 18650 cylindrical battery and has an energy density ranging from 230 Wh/kg to 250 Wh/kg;
A positive electrode active material of the cylindrical battery is LiNiₓM₁₋ₓO₂, wherein M includes at least one of Co, or Mn, and 0.8≤x≤0.9;
The negative electrode plate includes a negative electrode current collector and a negative electrode active material layer disposed on at least one surface of the negative electrode current collector. A mass proportion of silicon in the negative electrode active material layer ranges from 5% to 8%.

Additional aspects and advantages of the embodiments of present disclosure will be provided at least in part in the following description, or will become apparent in part from the following description, or can be learned from the practice of the embodiments of the present disclosure.

### BRIEF DESCRIPTION OF THE DRAWINGS

These and other aspects and advantages of embodiments of the present disclosure will become apparent and more readily appreciated from the following descriptions made with reference to the accompanying drawings.

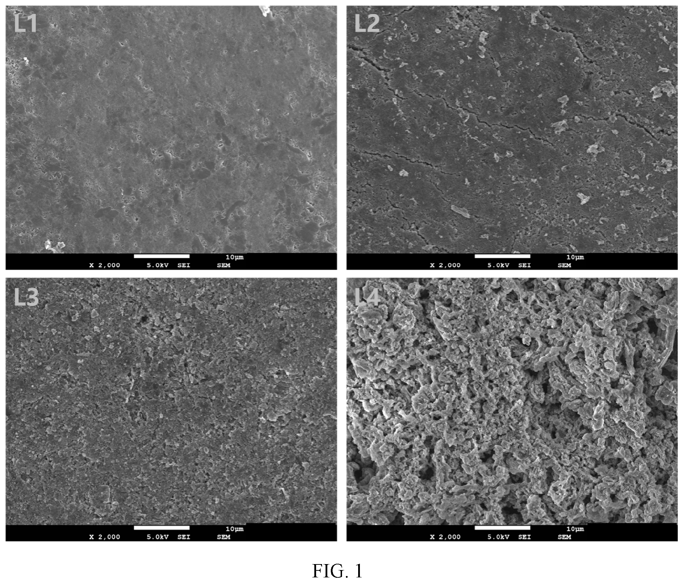

FIG. 1 shows SEM images of a negative electrode interface with different degrees of flatness according to the present disclosure.

### DETAILED DESCRIPTION OF THE EMBODIMENTS

The embodiments of the present disclosure are described in detail below. The embodiments described below are illustrative only, and are intended to explain the present disclosure rather than limit the present disclosure.

In addition, terms such as "first" and "second" are used herein for purposes of description and are not intended to indicate or imply relative importance, or to implicitly show the number of indicated technical features. Thus, the feature defined with "first" and "second" may include at least one feature. In the description of the present disclosure, "a plurality of" means at least two, for example, two or three, unless specified otherwise.

Endpoint values or any values of ranges disclosed in the present disclosure are not limited to the precise ranges or values. These ranges or values should be understood to include values close to these ranges or values. For numerical ranges, one or more new numerical ranges can be obtained by combining point values within the respective ranges, an endpoint value and an individual point value within the respective ranges, and individual point values within the respective ranges, and these numerical ranges should be regarded as specifically disclosed in the present disclosure.

For an easier understanding of the present disclosure, certain technical and scientific terms are specifically defined below. Unless obviously and clearly defined elsewhere in this document, all other technical and scientific terms used herein have the meanings commonly understood by general technical personnel in the field to which the present disclosure belongs.

Terms such as "comprising" or "including" as used herein are open-ended expressions, i.e., including contents specified in the present disclosure but not excluding other contents.

The amount of electrolyte additives only accounts for a small part of an electrolyte in a lithium-ion battery. However, appropriate amounts of the additives can form SEI on a surface of a negative electrode active material, which is referred as to an interfacial film in the present disclosure, and can reduce a problem of side reactions occurring after direct contact between the negative electrode material and the electrolyte.

However, silicon-based negative electrodes have problems such as particle pulverization, unstable SEI growth, and volume expansion. These problems ultimately lead to a reduction in a coulombic efficiency and cycle life of silicon-based lithium-ion batteries, as well as poor fast-charging cycle performance of the batteries. Therefore, regulating an electrolyte composition and improving stability of the SEI film are crucial for enhancing electrochemical performance of the silicon-containing lithium-ion batteries.

In view of this, the present disclosure provides a battery. The battery includes an electrolyte and a negative electrode plate. The electrolyte includes a first additive and a second additive. The first additive has a structure represented by Formula 1. The second additive includes at least one of tripropargyl phosphate (CAS: 1779-34-6), (2-propynyl) dibutyl phosphate (CAS: 18687-46-2), or ethyl diprop-2-ynyl phosphate (CAS: 69695-73-4). The negative electrode plate includes a negative electrode active material. The negative electrode active material includes element silicon.

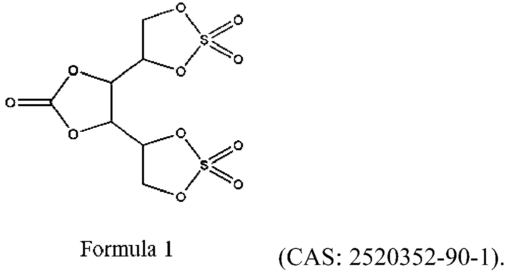

The battery according to the present disclosure includes the electrolyte and the negative electrode containing silicon, and the electrolyte includes the first additive and the second additive, which can undergo electropolymerization during battery operation and adheres to the surface of negative electrode to maintain interfacial flatness of the negative electrode, mitigating volume expansion and pulverization of the silicon negative electrode, thereby promoting cycle stability of the battery.

Specifically, the second additive contains unsaturated alkynyl groups at both ends, which serve as polymerization sites during polymerization to form long-chain polymers. During actual charge/discharge process, the second additive can be tightly anchored on the surfaces of the positive and negative electrodes through C≡C for polymerization, thereby maintaining interfacial flatness, mitigating volume expansion and pulverization of the silicon negative electrode, and thus promoting the cycle stability of the battery. However, when the concentration of the second additive reaches a certain level, its adsorption mode changes from horizontal adsorption to vertical adsorption, which hinders lithium-ion transport and reduces the uniformity of the interfacial film, resulting in increased impedance and susceptibility to pulverization of the surface of the negative electrode. While the by-product Li₂SO₄ of the first additive has an ability to oxidize other unsaturated groups (such as C=C and C≡C), thereby promoting polymerization. For example, Li₂SO₄ oxidizes the C≡C in the second additive structure, promoting bond-cleavage polymerization of C≡C while reducing the probability of vertical adsorption of the second additive, thereby mitigating adverse effects of the second additive on the negative electrode interface, amd ensuring stable long-cycle and high-temperature storage performance of the battery.

According to a specific embodiment of the present disclosure, a mass ratio of the first additive to the second additive is 1:(0.1 to 2). When the first additive is excessive, the content of lithium carbonate inside the battery is relatively high, causing CO₂ to shuttle back and forth, and thus leading to severe gas generation in the system. When the second additive is excessive, the probability of the vertical adsorption at the interface is greatly increased, which in turn affects desolvation and lithium-ion transport and is unfavorable to stability of the negative electrode surface structure. Selection can be made according to actual needs. As some specific examples, the mass ratio of the first additive to the second additive may be 1:0.1, 1:0.5, 1:1, 1:2, etc., preferably 1:(0.1 to 1). Therefore, the interfacial flatness of the battery can be improved, thereby improving its fast-charging cycle performance.

The electropolymerization process of the compound represented by Formula 1 during battery operation is as follows:

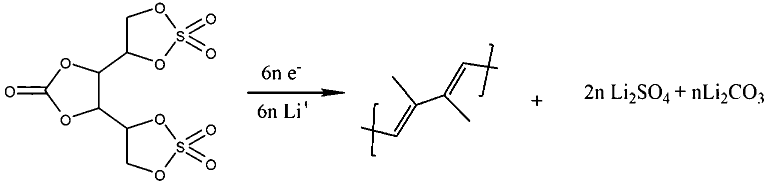

The compound represented by Formula 1 undergoes de-esterification to form a long-chain hydrocarbon polymer with by-products Li₂SO₄ and Li₂CO₃. Li₂SO₄ has an ability to oxidize other unsaturated groups (such as C≡C), thereby promoting polymerization of other additives. Li₂CO₃ can effectively weaken the reductive decomposition of ethylene carbonate in the electrolyte at 0.75 V and inhibit the formation of lithium alkyl carbonate at 0.6 V, thereby maintaining electrolyte stability, reducing Li⁺ loss, and improving cycle stability of the lithium-ion battery.

Specifically, the second additive includes at least one of tripropargyl phosphate, (2-propynyl) dibutyl phosphate, or ethyl diprop-2-ynyl phosphate.

According to a specific embodiment of the present disclosure, the second additive includes tripropargyl phosphate (TPP). TPP is oxidized (loses electrons) before a primary solvent. The acidic corrosive substance F in the electrolyte, having strong electronegativity, attacks the carbon nucleus of TPP, causing cleavage of π bond in C≡C, thereby forming a C-F covalent bond and undergoing a chain addition reaction at the positive electrode. When TPP gains electrons, H protons in the electrolyte, due to their relatively strong electrophilicity, approach the electron cloud of alkynyl p orbital, thereby forming a C-H covalent bond and undergoing a chain addition reaction at the negative electrode.

According to a specific embodiment of the present disclosure, the battery further includes a third additive. The third additive has a structure represented by Formula 2:

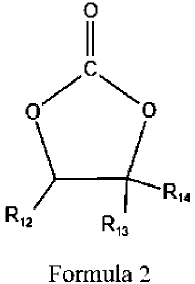

R₁₂, R₁₃, and R₁₄ are each independently selected from H, C₁ to C₆ alkyl, or C₂ to C₄ alkenyl, provided that R₁₂, R₁₃, and R₁₄ are not all H simultaneously and that at least one of R₁₂, R₁₃, or R₁₄ contains a carbon-carbon double bond; or R₁₂ and an atom bonded to R₁₂ together form C₂ to C₄ alkenyl, and R₁₃ and R₁₄ are each independently selected from H, C₁ to C₆ alkyl, or C₂ to C₄ alkenyl; or R₁₂ and R₁₃ and atoms bonded to R₁₂ and R₁₃ together form C₃ to C₈ cycloalkenyl, and R₁₄ is H.

Specifically, the polymerization reaction of the third additive may be classified into two modes. (1) At least one of R₁₂ and R₁₃ in the third additive structure contains a carbon-carbon double bond, which can serve as a polymerization site. That is, the olefin bond is cleaved and then undergoes the polymerization reaction, with cyclic ester moieties distributed at both ends of the polymer chain. This pathway can be verified by Fourier-transform infrared (FTIR) spectroscopy, which exhibits stable peaks at 1795 cm⁻¹ (C=O) and 1063 cm⁻¹ (CO). (2) The C=O bond in the third additive structure is cleaved, followed by side-by-side polymerization of carbon-carbon double bonds to form a high-molecular-weight long-chain polymer. Compared with the first polymerization mode, the polymer obtained by this polymerization mode has a lower degree of polymerization, while its polymerization reaction is more stable. The polymers obtained after the reaction adhere to the surfaces of the positive and negative electrodes, protecting the interfaces of the positive and negative electrodes to maintain their flatness, thereby promoting the cycle stability of the battery.

According to specific embodiments of the present disclosure, R₁₂, R₁₃, and R₁₄ are each independently selected from H, C₁ to C₄ alkyl, or C₂ to C₄ alkenyl, provided that R₁₂, R₁₃, and R₁₄ are not all H simultaneously and that at least one of R₁₂, R₁₃, or R₁₄ contains a carbon-carbon double bond; or R₁₂ and an atom bonded to R₁₂ together form C₂ to C₄ alkenyl, and R₁₃ and R₁₄ are each independently selected from C₁ to C₄ alkyl or C₂ to C₄ alkenyl; or R₁₂ and R₁₃ and atoms bonded to R₁₂ and R₁₃ together form C₇ to C₈ cycloalkenyl, and R₁₄ is H. Therefore, steric hindrance caused by an excessively long carbon chain can be reduced, alleviating the problem of low film-forming efficiency at the interface between the material and the electrolyte. Meanwhile, the additive can undergo polymerization through two different pathways to obtain long-chain polymers, which then adhere to the surfaces of the positive and negative electrodes, protecting the interfaces of the positive and negative electrodes and maintaining their flatness, thereby promoting cycle stability of the battery.

According to specific embodiments of the present disclosure, R₁₂, R₁₃, and R₁₄ are each independently selected from H, C₁ alkyl, or C₂ alkenyl, provided that R₁₂, R₁₃, and R₁₄ are not all H simultaneously and that at least one of R₁₂, R₁₃, or R₁₄ contains a carbon-carbon double bond; or R₁₂ and an atom bonded to R₁₂ together form C₂ alkenyl, and R₁₃ and R₁₄ are each independently selected from C₁ alkyl or C₂ alkenyl; or R₁₂ and R₁₃ and atoms bonded to R₁₂ and R₁₃ together form C₇ cycloalkenyl, and R₁₄ is H. Therefore, steric hindrance caused by an excessively long carbon chain can be further reduced, alleviating the problem of low film-forming efficiency at the interface between the material and the electrolyte. Meanwhile, the additive can undergo polymerization in two different ways to obtain long-chain polymers, which then adhere to the surfaces of the positive and negative electrodes, protecting the interfaces of the positive and negative electrodes and maintaining their flatness, thereby promoting cycle stability of the battery.

According to a specific embodiment of the present disclosure, the third additive includes at least one of the following compounds:

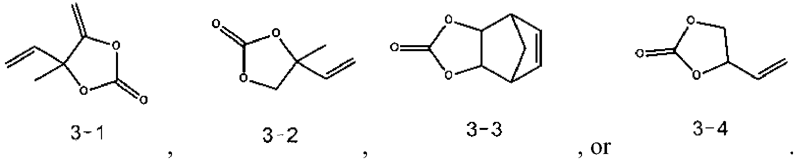

Specifically, Formula 3-1 has CAS No.142429-71-8, Formula 3-2 has CAS No. 96548-13-9, Formula 3-3 has CAS No. 25326-19-6, and Formula 3-4 has CAS No. 4427-96-7.

Taking the compound represented by Formula 3-4 as an example, its electropolymerization process during battery operation is as follows:

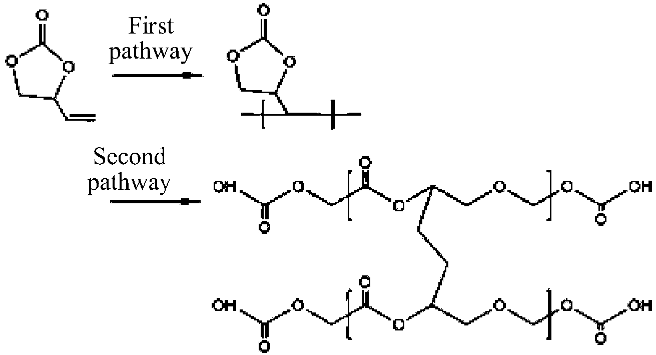

According to a specific embodiment of the present disclosure, a mass ratio of the first additive, the second additive, and the third additive is 1:(0.1 to 2):(0.1 to 1). Adsorption of the actual polymerization product on the surface of the interfacial film is affected by different additive ratios. When the first additive is excessive, the content of lithium carbonate inside the battery is relatively high, causing CO₂ to shuttle back and forth, and thus leading to severe gas generation in the system. When the second additive is excessive, the probability of the vertical adsorption at the interface is greatly increased, which in turn affects desolvation and lithium-ion transport. When the third additive is excessive, excess molecules fails to be aggregated and adsorbed properly at the interface. In this case, free molecules in the electrolyte are increased, and the reaction mechanism may predominately involve common redox reactions, generating gas such as CO₂ and O₂. Selection can be made according to actual needs. As some specific examples, the mass ratio of the first additive, the second additive, and the third additive may be 1:0.1:1, 1:1:0.2, 1:1:1, 1:0.1:0.1, 1:2:0.1, 1:2:1, etc., preferably 1: (0.1 to 1): (0.1 to 0.2). Therefore, the interfacial flatness can be improved, thereby enhancing the fast-charging cycle performance of the battery.

According to a specific embodiment of the present disclosure, the battery includes an electrolyte. Based on a total mass of the electrolyte, a mass proportion of the first additive ranges from 0.05% to 5%, such as 0.05%, 0.1%, 1%, 1.5%, 2%, 2.5%, 3%, 3.5%, 4%, 4.5%, and 5%. When the content of the first additive falls within the above range, the electropolymerization can effectively occur during battery operation to form long-chain polymers, which adhere to the surfaces of the positive and negative electrodes, maintaining the interfacial flatness, and thereby improving the fast-charging cycle stability of the battery. In some embodiments of the present disclosure, based on the total mass of the electrolyte, the mass proportion of the first additive ranges from 0.1% to 1%.

According to a specific embodiment of the present disclosure, based on the total mass of the electrolyte, a mass proportion of the second additive ranges from 0.05% to 1%, such as 0.05%, 0.1%, 0.5%, and 1%. When the content of the second additive falls within the above range, the electropolymerization can effectively occur during battery operation to form long-chain polymers, which adhere to the surfaces of the positive and negative electrodes, maintaining the interfacial flatness, and thereby improving the fast-charging cycle stability of the battery. Meanwhile, the combination of the second additive with the first additive also mitigate the adverse effect of the second additive on interfacial stability of the battery, thereby ensuring the stable long-cycle and high-temperature storage performance of the battery. In some embodiments of the present disclosure, based on the total mass of the electrolyte, the mass proportion of the second additive ranges from 0.1% to 0.4%.

According to a specific embodiment of the present disclosure, based on the total mass of the electrolyte, a mass proportion of the third additive ranges from 0.01% to 0.5%, such as 0.01%, 0.05%, 0.1%, and 0.5%. When the content of the third additive falls within the above range, the electropolymerization can effectively occur during battery operation to form long-chain polymers, which adhere to the surfaces of the positive and negative electrodes, maintaining the interfacial flatness, thereby improving the fast-charging cycle stability of the battery. Meanwhile, the combination of the third additive with the first additive and the second additive can also ensure the stable long-cycle and high-temperature storage performance of the battery. In some embodiments of the present disclosure, based on the total mass of the electrolyte, the mass proportion of the third additive ranges from 0.05% to 0.1%.

According to a specific embodiment of the present disclosure, the electrolyte further includes a lithium salt. The lithium salt includes at least one of lithium hexafluorophosphate, or lithium bis(fluorosulfonyl)imide. Therefore, adding the electrolyte to the lithium-ion battery can reduce gas generation and improve cycle performance of the battery.

According to a specific embodiment of the present disclosure, the lithium salt includes lithium hexafluorophosphate and lithium bis(fluorosulfonyl)imide, and a mass ratio of the lithium hexafluorophosphate to lithium bis(fluorosulfonyl)imide is (2 to 5):1. Therefore, adding the above two lithium salts to the electrolyte simultaneously can further reduce gas generation and improve cycle performance of the battery. The mass ratio of lithium hexafluorophosphate to lithium bis(fluorosulfonyl)imide may be 2:1, 3:1, 4:1, 5:1, etc. Thus, when the ratio of the two lithium salts is controlled within the above range, adding the electrolyte to the lithium-ion battery can reduce gas generation and improve cycle performance of the battery.

According to a specific embodiment of the present disclosure, the electrolyte further includes a solvent. The solvent includes a cyclic organic solvent and/or a linear organic solvent.

Specifically, the cyclic organic solvent may include one or more of cyclic carbonates such as ethylene carbonate (EC) and propylene carbonate (PC), one or more of cyclic carboxylates such as γ-butyrolactone, γ-valerolactone, and ε-caprolactone, one or more of cyclic ethers such as tetrahydrofuran, 3-methyltetrahydrofuran, 1,3-dioxolane, and 1,4-dioxolane, or one or more of linear sulfones such as dimethyl sulfone, monofluoromethyl methyl sulfone, and trifluoromethyl isopropyl sulfone.

Specifically, the linear organic solvent may include one or more of linear carbonates such as dimethyl carbonate (DMC), ethyl methyl carbonate (EMC), diethyl carbonate (DEC), and methyl propyl carbonate (MPC), one or more of linear carboxylates such as methyl acetate, ethyl acetate, methyl propionate, and ethyl propionate, or one or more of linear ethers such as ethyl ether, bis(2-fluoroethyl) ether, and bis(2,2-difluoroethyl) ether.

According to a specific embodiment of the present disclosure, the electrolyte may further include addititional additives. The addititional additives are selected at least one of vinylene carbonate (VC), fluoroethylene carbonate (FEC), ethylene sulfate (DTD), 1,3-propane sultone (PS), ethylene sulfite (ES), or lithium difluorobis(oxalato)phosphate (LiODFP). A mass proportion of the conventional additives in the electrolyte ranges from 0.5% to 5%, such as 0.5%, 1%, 1.5%, 2%, 2.5%, 3%, 3.5%, 4%, 4.5%, or 5%.

It should be noted that conventional additives are the types of additives commonly used in the art, which can be selected by those skilled in the art according to actual needs and thus are not described herein in detail. The characteristics and advantages described for the above electrolyte additives are also applicable to the electrolyte, and thus are not described herein in detail.

According to a specific embodiment of the present disclosure, the battery further includes a positive electrode active material. The positive electrode active material includes at least one of a lithium iron phosphate material, LiCoO₂ material, a lithium-rich manganese-based material (aLi₂MnO₃•(1-a)LiMO₂), a LiNiₓCo_{y}Mn_{z}O₂ material, a lithium nickel manganese oxide (LiNi_{0.5}Mn_{1.5}O₄) material, or lithium manganese iron phosphate (LiFe_{b}Mn_{1-b}PO₄), where 0≤a≤1, 0≤b≤1, x+y+z=1, and M includes at least one of Ni, Co, or Mn. Therefore, the cycle performance of the battery can be improved.

According to a specific embodiment of the present disclosure, the positive electrode active material includes LiNiₓM₁₋ₓO₂ (M includes at least one of Co, or Mn, and 0.8≤x≤0.9). This high-nickel ternary material is a preferred positive electrode material for current and future automotive power batteries due to its advantages such as low cost, high energy density, high reversible capacity, and environmental friendliness. In addition, the combination of the above high-nickel ternary material and the electrolyte according to the present disclosure can further improve the cycle stability of the battery under high voltage and reduce gas generation of the battery. Specifically, x may be selected as 0.8, 0.85, 0.9, etc.

Typically, a battery includes a positive electrode plate, a negative electrode plate, an electrolyte, and a separator. During charge/discharge process of the battery, active ions are intercalated and deintercalated back and forth between the positive electrode plate and the negative electrode plate. The electrolyte functions for ion conduction between the positive electrode plate and the negative electrode plate. The separator is disposed between the positive electrode plate and the negative electrode plate, mainly preventing a short circuit between a positive electrode and a negative electrode, while allowing the ions to pass through.

The positive electrode plate includes a positive electrode current collector and a positive electrode active material layer disposed on at least one surface of the positive electrode current collector. The positive electrode active material layer includes the above positive electrode active material.

In some embodiments of the present disclosure, the positive current collector may include a metallic foil or a composite positive electrode current collector. For example, the metallic foil may be an aluminum foil. The composite positive electrode current collector may include a polymer material substrate layer and a metallic layer formed on at least one surface of the polymer material substrate layer. For example, the composite negative electrode current collector may be formed by depositing a metallic material (such as aluminum, aluminum alloys, nickel, and nickel alloys) on a polymer material substrate (such as polypropylene (PP), polyethylene terephthalate (PET), and polybutylene terephthalate (PBT)).

In some embodiments of the present disclosure, the positive electrode active material layer may further optionally include a conductive agent. As an example, the conductive agent may include at least one of superconducting carbon, acetylene black, carbon black, Ketjen black, carbon dots, carbon nanotubes, graphene, or carbon nanofibers.

In some embodiments of the present disclosure, the positive electrode active material layer may further optionally include a binder. As an example, the binder may include at least one of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, or fluorinated acrylate resin.

In some embodiments of the present disclosure, the positive electrode plate may be prepared by the following method. The above components for preparing the positive electrode plate, such as the positive active material, the conductive agent, and the binder, are dispersed in a solvent (e.g., N-methylpyrrolidone) to form a positive electrode slurry; and the positive electrode slurry is coated onto the positive electrode current collector, followed by processes such as drying and cold calendaring, and the positive electrode plate can thus be obtained.

The negative electrode plate includes a negative current collector and a negative electrode active material layer disposed on at least one surface of the negative current collector. The negative electrode active material layer includes a negative active material.

In some embodiments of the present disclosure, the negative electrode current collector may be a metallic foil or a composite current collector. For example, a copper foil may be used as the metallic foil. The composite current collector may include a polymer material substrate layer and a metallic layer formed on at least one surface of the polymer material substrate layer. The composite current collector may be formed by depositing a metallic material (such as copper, copper alloys, nickel, and nickel alloys) on a polymer material substrate (such as substrates of polypropylene (PP), polyethylene terephthalate (PET), and polybutylene terephthalate (PBT)).

In some embodiments of the present disclosure, the negative electrode active material may be a silicon-containing active material for batteries known in the art. As an example, the negative electrode active material may include at least one of elemental silicon, a silicon-oxygen compound, a silicon-carbon composite, or CVD silicon, and is used in combination with natural graphite, artificial graphite, soft carbon, hard carbon, meso-carbon microbeads, and nano-carbon. A mass proportion of silicon in the negative electrode active material ranges from 5% to 8%.

In some embodiments of the present disclosure, the negative active material layer may further optionally include a binder. The binder may include at least one of styrene-butadiene rubber (SBR), polyacrylic acid (PAA), sodium polyacrylate (PAAS), polyacrylamide (PAM), polyvinyl alcohol (PVA), sodium alginate (SA), polymethacrylic acid (PMAA), or carboxymethyl chitosan (CMCS).

In some embodiments of the present disclosure, the negative electrode active material layer may further optionally include a conductive agent. The conductive agent may include at least one of superconducting carbon, acetylene black, carbon black, Ketjen black, carbon dots, carbon nanotubes, graphene, or carbon nanofibers.

In some embodiments of the present disclosure, the negative electrode active material layer may further optionally include additional additives, such as a thickener (such as sodium carboxymethyl cellulose (CMC-Na)).

In some embodiments of the present disclosure, the negative electrode plate may be prepared by the following method. The above components for preparing the negative electrode plate, such as the negative electrode active material, the conductive agent, the binder, and any other components, are dispersed in a solvent (e.g., deionized water) to form a negative electrode slurry; and the negative electrode slurry is coated onto the negative electrode current collector, followed by processes such as drying and cold calendaring, and the negative electrode plate can thus be obtained.

The present disclosure has no particular limitation on the type of the separator, and any known separator with a porous structure, which exhibits good chemical stability and mechanical stability, can be selected.

In some embodiments of the present disclosure, the material of the separator may includes at least one of glass fiber, non-woven fabric, polyolefin film, aromatic polyamide film, polytetrafluoroethylene film, or polyethersulfone film. In some embodiments of the present disclosure, the separator may have a thickness ranging from 10 µm to 12 µm, such as 10 µm, 11 µm, and 12 µm.

In some embodiments of the present disclosure, the battery is a cylindrical battery, which includes the above electrolyte, positive electrode active material, and negative electrode active material.

In some embodiments of the present disclosure, the cylindrical battery is an 18650 cylindrical battery and has an energy density ranging from 230 Wh/kg to 250 Wh/kg;

A positive electrode active material of the cylindrical battery is LiNiₓM₁₋ₓO₂, where M includes at least one of Co, or Mn, and 0.8≤x≤0.9;

The negative electrode plate includes a negative electrode current collector and a negative electrode active material layer disposed on at least one surface of the negative electrode current collector. A mass proportion of silicon in the negative electrode active material layer ranges from 5% to 8%.

The aforementioned electrolyte has good compatibility with the positive electrode active material and the negative electrode active material, which is beneficial to improving electrochemical performance of the battery.

If specific techniques or conditions are not specified in examples, the techniques or conditions described in the literature in the art or product instructions shall be followed. All reagents and instruments used without indicated manufacturers are commercially available conventional products.

### Example 1

1. Preparation of Electrolyte: EC and DMC in a mass ratio of 3:7 were used as solvents. After mixing, lithium salts (LiPF₆ and LiFSI), electrolyte additives, vinylene carbonate (VC), and 1,3-propane sultone (PS) were added according to their mass fractions, and the mixture was uniformly mixed to obtain the electrolyte.
2. Preparation of Positive Electrode Plate: LiNi_{0.8}Co_{0.1}Mn_{0.1}O₂ positive electrode active material, conductive agent SuperP (conductive carbon black), carbon nanotubes, and binder PVDF (polyvinylidene fluoride) were mixed in a mass ratio of 94:2.5:1.5:2, and vacuum-stirred until the mixture had a certain viscosity and uniform fluidity. The slurry was then uniformly coated onto both sides of an aluminum foil, followed by drying at 85°C, cold calendaring, edge trimming, sheet cutting, slitting, and vacuum drying at 85°C for 10 hours. After welding tabs, the positive electrode plate having an areal density of 30 mg/cm² was prepared.
3. Preparation of Negative Electrode Plate: CVD silicon, graphite material, conductive agent SuperP (conductive carbon black, SP), thickener CMC (sodium carboxymethyl cellulose), binder SBR (styrene-butadiene rubber emulsion) were fully mixed in a mass ratio of 7.5:87:2:1.5:2 to form a uniform slurry. The slurry was coated onto both sides of a copper foil, followed by drying at 85°C, cold calendaring, edge trimming, sheet cutting, slitting, and vacuum drying at 85°C for 12 hours. After welding tabs, the negative electrode plate having an areal density of 12 mg/cm² was obtained.
4. Separator: A porous polyethylene polymer film having a thickness of 9 µm was used as a substrate, and an adhesive coating of 2 µm was applied on both sides of the substrate.
5. Preparation of Battery: The positive electrode plate, the separator, and the negative electrode plate were wound to obtain an electrode roll. The separator was placed between the positive and negative electrode plates to provide isolation. The electrode roll was placed in a housing (made of nickel-plated stainless steel), and the negative electrode current collector was laser-welded to the housing. After drying, the electrolyte was injected. After standing, the cell was subjected to formation by charging to 4.2 V at 0.1C at 45°C to form a passivation layer, followed by capacity grading and other subsequent processes, thereby completing preparation of battery.

The methods for preparing lithium-ion batteries of Examples 2 to 28 and all comparative examples were the same as that of Example 1, with a difference in the electrolyte compositions, as shown in Table 1. Additive 2-1 was tripropargyl phosphate, Additive 2-2 was propyl bis(2-propynyl) phosphate, and Additive 2-3 was ethyl bis(2-propynyl) phosphate.

Example 29 differed from Example 1 in the positive electrode active material. In Example 29, the positive electrode active material was lithium iron phosphate (LiFePO₄, LFP), with the actual slurry mixing ratio of LFP:SP:PVDF=95:2.5:2.5, and the charge/discharge voltage range of the battery ranging from 2 V to 3.65 V.

**[Table 1]**

| | First additive | Second additive | Third additive | Lithium salt (wt%) | Amount of first additive wt% | Amount of second additive wt% | Mass ratio of first additive to second additive | Amount of third additive wt% | Mass ratio of first, second and third additives |
|---|---|---|---|---|---|---|---|---|---|
| Example 1 | 1-1 | 2-1 | / | 10%LiP F₆+2%L iFSI | 0.05% | 0.10% | 1:2 | / | / |
| Example 2 | 1-1 | 2-1 | / | 10%LiP F₆+2%L iFSI | 0.10% | 0.10% | 1:1 | / | / |
| Example 3 | 1-1 | 2-1 | / | 10%LiP F₆+2%L iFSI | 0.20% | 0.10% | 1:0.5 | / | / |
| Example 4 | 1-1 | 2-1 | / | 10%LiP F₆+2%L iFSI | 0.50% | 0.10% | 1:0.2 | / | / |
| Example 5 | 1-1 | 2-1 | / | 10%LiP F₆+2%L iFSI | 0.80% | 0.10% | 1:0.125 | / | / |
| Example 6 | 1-1 | 2-1 | / | 10%LiP F₆+2%L iFSI | 1.00% | 0.10% | 1:0.1 | / | / |
| Example 7 | 1-1 | 2-1 | / | 10%LiP F₆+2%L iFSI | 2.00% | 0.10% | 1:0.05 | / | / |
| Example 8 | 1-1 | 2-1 | / | 10%LiP F₆+2%L iFSI | 5.00% | 0.10% | 1:0.02 | / | / |
| Example 9 | 1-1 | 2-1 | / | 10%LiP F₆+2%L iFSI | 0.50% | 0.05% | 10:1 | / | / |
| Example 10 | 1-1 | 2-1 | / | 10%LiP F₆+2%L iFSI | 0.50% | 0.20% | 5:2 | / | / |
| Example 11 | 1-1 | 2-1 | / | 10%LiP F₆+2%L iFSI | 0.50% | 0.30% | 5:3 | / | / |
| Example 12 | 1-1 | 2-1 | / | 10%LiP F₆+2%L iFSI | 0.50% | 0.40% | 5:4 | / | / |
| Example 13 | 1-1 | 2-1 | / | 10%LiP F₆+2%L iFSI | 0.50% | 0.50% | 1:1 | / | / |
| Example 14 | 1-1 | 2-1 | / | 10%LiP F₆+2%L iFSI | 0.50% | 1.00% | 1:2 | / | / |
| Example 15 | 1-1 | 2-1 | / | 10%LiP F₆+2%L iFSI | 0.025% | 0.05% | 1:2 | / | / |
| Example 16 | 1-1 | 2-1 | / | 10%LiP F₆+2%L iFSI | 0.05% | 0.01% | 1:0.2 | / | / |
| Example 17 | 1-1 | 2-1 | / | 10%LiP F₆+2%L iFSI | 6% | 1.5% | 4:1 | / | / |
| Example 18 | 1-1 | 2-2 | / | 10%LiP F₆+2%L iFSI | 0.50% | 0.10% | 1:2 | / | / |
| Example 19 | 1-1 | 2-3 | / | 10%LiP F₆+2%L iFSI | 0.50% | 0.10% | 1:2 | / | / |
| Example 20 | 1-1 | 2-1 | 3-4 | 10%LiP F₆+2%L iFSI | 0.50% | 0.10% | 5:1 | 0.01% | 1:0.2:0.02 |
| Example 21 | 1-1 | 2-1 | 3-4 | 10%LiP F₆+2%L iFSI | 0.50% | 0.10% | 5:1 | 0.05% | 1:0.2:0.1 |
| Example 22 | 1-1 | 2-1 | 3-4 | 10%LiP F₆+2%L iFSI | 0.50% | 0.10% | 5:1 | 0.08% | 1:0.2:0.16 |
| Example 23 | 1-1 | 2-1 | 3-4 | 10%LiP F₆+2%L iFSI | 0.50% | 0.10% | 5:1 | 0.1% | 1:0.2:0.2 |
| Example 24 | 1-1 | 2-1 | 3-4 | 10%LiP F₆+2%L iFSI | 0.50% | 0.10% | 5:1 | 0.2% | 1:0.2:0.4 |
| Example 25 | 1-1 | 2-1 | 3-4 | 10%LiP F₆+2%L iFSI | 0.50% | 0.10% | 5:1 | 0.5% | 1:0.2:1 |
| Example 26 | 1-1 | 2-1 | 3-1 | 10%LiP F₆+2%L iFSI | 0.50% | 0.10% | 5:1 | 0.05% | 1:0.2:0.1 |
| Example 27 | 1-1 | 2-1 | 3-2 | 10%LiP F₆+2%L iFSI | 0.50% | 0.10% | 5:1 | 0.05% | 1:0.2:0.1 |
| Example 28 | 1-1 | 2-1 | 3-3 | 10%LiP F₆+2%L iFSI | 0.50% | 0.10% | 5:1 | 0.05% | 1:0.2:0.1 |
| Example 29 | 1-1 | 2-1 | / | 10%LiP F₆+2%L iFSI | 0.50% | 0.10% | 1:2 | / | / |
| Example 30 | 1-1 | 2-1 | / | 10%LiP F₆+2%L iFSI | 0.05% | 0.25% | 1:5 | / | / |
| Example 31 | 1-1 | 2-1 | 3-4 | 10%LiP F₆+2%L iFSI | 0.50% | 0.10% | 5:1 | 1.00% | 1:0.2:2 |
| Example 32 | 1-1 | 2-1 | 3-4 | 10%LiP F₆+2%L iFSI | 0.50% | 1.50% | 1:3 | 1.00% | 1:3:2 |
| Comparative Example 1 | / | 2-1 | 3-4 | 10%LiP F₆+2%L iFSI | / | 0.10% | / | 0.05% | / |
| Comparative Example 2 | 1-1 | / | 3-4 | 10%LiP F₆+2%L iFSI | 0.50% | / | / | 0.05% | / |
| Comparative Example 3 | 1-1 | / | / | 10%LiP F₆+2%L iFSI | 0.50% | / | / | / | / |
| Comparative Example 4 | / | 2-1 | / | 10%LiP F₆+2%L iFSI | / | 0.05% | / | / | / |
| Comparative Example 5 | / | / | 3-4 | 10%LiP F₆+2%L iFSI | / | / | / | 0.05% | / |
| Comparative Example 6 | / | / | / | 10%LiP F₆+2%L iFSI | / | / | / | / | / |

| | | | | | | | | | |
|---|---|---|---|---|---|---|---|---|---|
| "/" means not added. | | | | | | | | | |

The cycle performance and negative electrode interface of the lithium-ion batteries obtained in Examples and Comparative Examples were characterized. The characterization results are shown in Table 2.
1. Cycle Test: At 25°C, the battery was charged to 4.3 V at a constant current of 1.5C, and charged to a cut-off current of 0.05C at a constant voltage of 4.3 V. Then, the battery was discharged at a constant current of 1.0C. The charge and discharge process was repeated for 500 cycles. The discharge capacities of the 500th cycle and the first cycle were recorded, and the capacity retention rate was obtained as the ratio of the two.
2. Interface Characterization: At 25°C, the battery was charged to 4.3 V at a constant current of 1.5C, and charged to a cut-off current of 0.05C at a constant voltage of 4.3 V. Then, the battery was discharged at a constant current of 1.0C. The charge and discharge process was repeated for 100 cycles. The discharge capacities of the 100th cycle and the 1st cycle were recorded, and the capacity retention rate was obtained as the ratio of the two. The battery after 100 cycles was disassembled, and portions of the negative electrode were subjected to SEM test. Based on the flatness of the interface, the results were classified into four levels: L1, L2, L3, and L4. Specifically:
   L1 (Excellent): The electrode plate remained overall flat, with uniform particle size and no obvious large cracks.
   L2 (Good): The electrode plate maintained good overall flatness, with no significant particle separation boundaries, but some obvious large cracks present locally.
   L3 (Moderate): The particle boundaries were distinct and not tight.
   L4 (Poor): The surface of the electrode plate was obviously lithium-plated and severely pulverized, and large-scale film peeling and powder shedding occurred during disassembling.

**[Table 2]**

| | Capacity retention rate after 500 cycles | Interface level indicators |
|---|---|---|
| Example 1 | 90.17% | L3 |
| Example 2 | 92.68% | L1 |
| Example 3 | 92.87% | L1 |
| Example 4 | 93.56% | L1 |
| Example 5 | 93.21% | L1 |
| Example 6 | 92.59% | L1 |
| Example 7 | 90.46% | L2 |
| Example 8 | 90.19% | L2 |
| Example 9 | 90.31% | L2 |
| Example 10 | 92.13% | L1 |
| Example 11 | 91.70% | L1 |
| Example 12 | 90.35% | L2 |
| Example 13 | 90.25% | L2 |
| Example 14 | 90.02% | L2 |
| Example 15 | 87.54% | L3 |
| Example 16 | 86.98% | L3 |
| Example 17 | 87.02% | L3 |
| Example 18 | 90.04% | L2 |
| Example 19 | 90.09% | L2 |
| Example 20 | 93.28% | L1 |
| Example 21 | 93.71% | L1 |
| Example 22 | 93.98% | L1 |
| Example 23 | 92.02% | L2 |
| Example 24 | 91.75% | L2 |
| Example 25 | 91.16% | L2 |
| Example 26 | 94.12% | L1 |
| Example 27 | 93.17% | L1 |
| Example 28 | 94.13% | L1 |
| Example 29 | 96.21% | L1 |
| Example 30 | 89.21% | L3 |
| Example 31 | 89.03% | L3 |
| Example 32 | 88.87% | L4 |
| Comparative Example 1 | 82.95% | L4 |
| Comparative Example 2 | 84.32% | L4 |
| Comparative Example 3 | 78.01% | L4 |
| Comparative Example 4 | 79.12% | L4 |
| Comparative Example 5 | 76.91% | L4 |
| Comparative Example 6 | 75.98% | L4 |

### Analysis of Experimental Results:

As can be seen from Examples 1 to 9 and 30, the first additive and the second additive were added in combination to the lithium-ion batteries in the examples of the present disclosure, resulting in a high degree of interfacial flatness and improved cycle performance. Compared with Examples 1 to 19, Example 30 used an increased amount of the second additive, such that the ratio of the first additive to the second additive exceeded 1:(0.1 to 2). As a result, the adsorption mode of the second additive changed from horizontal adsorption to vertical adsorption, which hindered lithium-ion transport, reduced the uniformity of the interfacial film, and led to increased impedance and a higher tendency for negative electrode surface pulverization. The test results of this example were therefore inferior to those of Examples 1 to 19, as also verified by the test results in Table 2. Nevertheless, the test results of Example 30 remained superior to Comparative Examples 1 to 6, indicating that the combined use of the first and second additives in lithium-ion batteries in the present disclosure still provides clear advantages in terms of interfacial flatness and cycle performance.

It can be seen from Examples 20 to 28, 31, and 32 that when the third additive was added to the electrolyte, the interfacial flatness and the cycle performance of the battery were further improved. Compared with Examples 20 to 28, Example 31 used an increased amount of the third additive, such that the ratio of the first, second, and third additives exceeded 1: (0.1 to 2): (0.1 to 1). As a result, excess molecules failed to be normally aggregated and adsorbed on the interface, leading to an increased number of free molecules in the electrolyte and a reaction mechanism dominated by common redox reactions, generating gas such as CO₂ and O₂. Therefore, the test results of Example 31 were inferior to those of Examples 20 to 28, as also verified by the test results in Table 2. Example 32, which simultaneously increased the amounts of the second and third additives, similarly showed test results inferior to Examples 20 to 28, consistent with the above analysis, as also verified by the test results in Table 2. Nevertheless, the test results of Examples 31 to 32 were still superior to Comparative Examples 1 to 6, indicating that the combined use of the first, second, and third additives in lithium-ion batteries in the present disclosure still provides clear advantages in terms of interfacial flatness and cycle performance.

It can be seen from Examples 1 and 29 that under the different positive electrode material systems, the combined use of the first and second additives results in a higher degree of flatness at the negative electrode interface and improved cycle performance.

Compared with Examples, the solutions of Comparative Examples 1 to 6 failed to improve either the interfacial flatness or cycle life of the battery. Comparative Example 6 corresponded to a solution without adding any additives. Comparative Examples 1 to 5 showed some improvement in cycle life relative to Comparative Example 6, but still performed worse than the Examples of the present disclosure.

The effects of different types and contents of the additives on battery performance were tested in Examples and Comparative Examples in the present disclosure, and specifically analyzed as follows:
(1) Compared with Examples 15 to 21, Comparative Example 1 lacked the first additive and included only the second and third additives. The second additive was more prone to vertical adsorption, which hindered lithium-ion transport and reduced the uniformity of the interfacial film, leading to increased impedance. The third additive was affected thereby, with fewer sites available for polymerization and adsorption, leaving many free molecules in the electrolyte that could undergo side reactions at the interface, thereby damaging interfacial flatness and reducing cycle life of the battery.
   Similarly, compared with Examples 1 to 28, Comparative Example 4, which included only the second additive, also damaged interfacial flatness and reduced cycle life of the battery.
(2) Compared with Examples 20 to 28, Comparative Example 2 lacked the second additive and included only the first and third additives. The mechanism of HF attack on the carbon-carbon triple bond to obtain LiF and the interfacial adsorption film could not occur and causes rapid acidity increase, affecting stability of the positive and negative electrodes and reducing cycle life of the battery.

Similarly, compared with Examples 1 to 20, 22, and 24, Comparative Example 3, which included only the first additive, also damaged interfacial flatness and reduced cycle life of the battery.

Similarly, compared with Examples 15 to 21, Comparative Example 5, which included only the third additive, also damaged interfacial flatness and reduced cycle life of the battery.

In summary, the combined use of the first and second additives according to the present disclosure achieves better battery performance compared to the cases where no first additive or no second additive was added. Furthermore, the addition of a third additive can further improve the technical effect.

Reference throughout this specification to "an embodiment," "some embodiments," "an example," "a specific example," or "some examples," means that a particular feature, structure, material, or characteristic described in connection with the embodiment or example is included in at least one embodiment or example of the present disclosure. The appearances of the above phrases in various places throughout this specification are not necessarily referring to the same embodiment or example of the present disclosure. Furthermore, the particular features, structures, materials, or characteristics may be combined in any suitable manner in one or more embodiments or examples. In addition, different embodiments or examples and features of different embodiments or examples described in the specification may be combined by those skilled in the art, unless they are contradictory to each other.
Although embodiments of the present disclosure have been shown and described, it would be appreciated by those skilled in the art that the above embodiments cannot be construed to limiting the present disclosure, and changes, modifications, alternatives, and alterations can be made in the embodiments without departing from scope of the present disclosure.

## Claims

1. A battery, comprising:
an electrolyte, comprising a first additive and a second additive, wherein the first additive has a structure represented by Formula 1, and wherein the second additive comprises at least one of tripropargyl phosphate, propyl bis(2-propynyl) phosphate, or ethyl bis(2-propynyl) phosphate; and
a negative electrode plate, comprising a negative electrode active material, wherein the negative active material comprises element silicon,

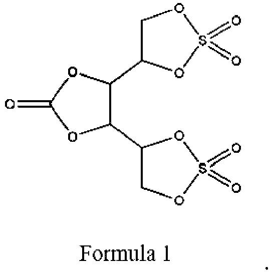

2. The battery according to claim 1, wherein a mass ratio of the first additive to the second additive is 1:(0.1 to 2), and preferably, 1:(0.1 to 1).

3. The battery according to claim 1, further comprising a third additive, wherein the third additive has a structure represented by Formula 2, 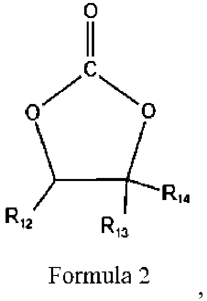 wherein:
R₁₂, R₁₃, and R₁₄ are each independently selected from H, C₁ to C₆ alkyl, or C₂ to C₄ alkenyl, provided that R₁₂, R₁₃, and R₁₄ are not all H simultaneously and that at least one of R₁₂, R₁₃, or R₁₄ comprises a carbon-carbon double bond; or
R₁₂ and an atom bonded to R₁₂ together form C₂ to C₄ alkenyl, and R₁₃ and R₁₄ are each independently selected from H, C₁ to C₆ alkyl, or C₂ to C₄ alkenyl; or
R₁₂ and R₁₃ and atoms bonded to R₁₂ and R₁₃ together form C₃ to C₈ cycloalkenyl, and R₁₄ is H.

4. The battery according to claim 3, wherein:
R₁₂, R₁₃, and R₁₄ are each independently selected from H, C₁ to C₄ alkyl, or C₂ to C₄ alkenyl, provided that R₁₂, R₁₃, and R₁₄ are not all H simultaneously and that at least one of R₁₂, R₁₃, or R₁₄ comprises a carbon-carbon double bond; or
R₁₂ and an atom bonded to R₁₂ together form C₂-C₄ alkenyl, and R₁₃ and R₁₄ are each independently selected from C₁ to C₄ alkyl or C₂ to C₄ alkenyl; or
R₁₂ and R₁₃ and atoms bonded to R₁₂ and R₁₃ together form C₇ to C₈ cycloalkenyl, and R₁₄ is H.

5. The battery according to claim 3, wherein:
R₁₂, R₁₃, and R₁₄ are each independently selected from H, C₁ alkyl, or C₂ alkenyl, provided that R₁₂, R₁₃, and R₁₄ are not all H simultaneously and that at least one of R₁₂, R₁₃, or R₁₄ comprises a carbon-carbon double bond; or
R₁₂ and an atom bonded to R₁₂ together form C₂ alkenyl, and R₁₃ and R₁₄ are each independently selected from C₁ alkyl or C₂ alkenyl; or
R₁₂ and R₁₃ and atoms bonded to R₁₂ and R₁₃ together form C₇ cycloalkenyl, and R₁₄ is H.

6. The battery according to claim 3, wherein the third additive comprises at least one of the following compounds:

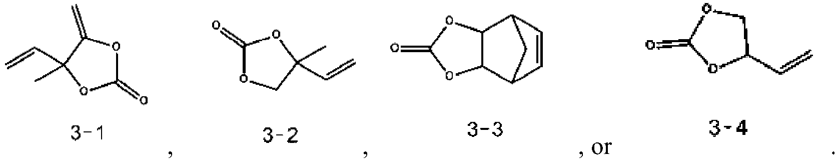

7. The battery according to any one of claims 3 to 6, wherein a mass ratio of the first additive, the second additive, and the third additive is 1:(0.1 to 2):(0.1 to 1), and preferably, 1:(0.1 to 1):(0.1 to 0.2).

8. The battery according to any one of claims 1 to 7, comprising an electrolyte, wherein based on a total mass of the electrolyte, a mass proportion of the first additive ranges from 0.05% to 5%, and preferably, from 0.1% to 1%.

9. The battery according to claim 8, wherein based on the total mass of the electrolyte, a mass proportion of the second additive ranges from 0.05% to 1%, and preferably, from 0.1% to 0.4%.

10. The battery according to claim 8, wherein based on the total mass of the electrolyte, a mass proportion of the third additive ranges from 0.01% to 0.5%, and preferably, from 0.05% to 0.1%.

11. The battery according to claim 8, wherein the electrolyte further comprises a lithium salt, the lithium salt comprises at least one of lithium hexafluorophosphate, or lithium bis(fluorosulfonyl)imide.

12. The battery according to claim 11, wherein the lithium salt comprises lithium hexafluorophosphate and lithium bis(fluorosulfonyl)imide, a mass ratio of lithium hexafluorophosphate to lithium bis(fluorosulfonyl)imide being (2 to 5):1.

13. The battery according to any one of claims 1 to 12, further comprising a positive electrode active material, wherein the positive electrode active material comprises at least one of lithium iron phosphate material, LiCoO₂ material, aLi₂MnO₃•(1-a)LiMO₂ material, LiNiₓCo_{y}Mn_{z}O₂ material, LiNi_{0.5}Mn_{1.5}O₄ material, or LiFe_{b}Mn_{1-b}PO₄ material, where 0≤a≤1; 0≤b≤1; x+y+z=1; and M comprises at least one of Ni, Co, or Mn.

14. The battery according to any one of claims 1 to 13, wherein the battery is a cylindrical battery.

15. The battery according to claim 14, wherein:
the cylindrical battery is an 18650 cylindrical battery and has an energy density ranging from 230 Wh/kg to 250 Wh/kg;
a positive electrode active material of the cylindrical battery is LiNiₓM₁₋ₓO₂, where M comprises at least one of Co, or Mn, and 0.8≤x≤0.9; and
the negative electrode plate comprises a negative electrode current collector and a negative electrode active material layer disposed on at least one surface of the negative electrode current collector, wherein a mass proportion of silicon in the negative electrode active material layer ranges from 5% to 8%.
